# EUROPÄISCHE PATENTANMELDUNG

(11) **EP 2 343 147 A1**
(43) Veröffentlichungstag der Anmeldung: **13.07.2011**
(21) Anmeldenummer: 10015429.3
(22) Anmeldetag: 08.12.2010
(51) Int. Cl.: B23K 26/08

(54) **Laserbearbeitungensvorrichtung für gross dimensionierte Bauteile**

(30) Priorität: 06.01.2010 DE 102010004084
(71) Anmelder: Held Systems AG, 6022 Grosswangen (CH)
(72) Erfinder: Held, Jürgen, 63150 Heusenstamm (DE); Held, Gunnar, 63150 Heusenstamm (DE); Franek, Joachim, 63486 Bruchkobel (DE)
(74) Vertreter: Grimm, Ekkehard

(57) **Zusammenfassung**

Die Erfindung betrifft eine Laserbearbeitungsvorrichtung für groß dimensionierte Bauteile mit einer Laserstrahlquelle und mindestens einem Bearbeitungskopf, wobei der Bearbeitungskopf über dem Bauteil entlang einer Bearbeitungslinie verfahrbar angeordnet ist, wobei in dem Strahlengang zwischen Laserstrahlquelle und Bearbeitungskopf mindestens ein optisches Element zwischengefügt ist, das den Laserstrahl umformt, die dadurch gekennzeichnet ist, dass das eine optische Element Teil von mindestens zwei Teleskopen ist, wobei die Teleskope so angeordnet sind, dass das erste Teleskop den Laserstrahlradius vergrößert und das zweite Teleskop den Laserstrahlradius verkleinert, oder dadurch, dass das erste optische Element ein fokussierendes Element ist, das den eintretenden Laserstrahl auf der Austrittsseite mit einer Strahltaille formt, die einer Strahltaille des Laserstrahls vor dem fokussierenden Element entspricht, oder dadurch, dass das erste optische Element Teil eines Systems aus optischen Elementen ist, das mindestens zwei optische Elemente umfasst, wobei der Abstand der zwei optischen Elemente größer ist als der geometrisch-optische Abstand.

## Beschreibung

Die vorliegende Erfindung betrifft eine Laserbearbeitungsvorrichtung für groß dimensionierte Bauteile mit einer Laserstrahlquelle und einem Bearbeitungskopf, wobei der Bearbeitungskopf mittels mindestens einer Längstraverse, die mindestens eine Koordinate (x-Koordinate) eines rechtwinkligen Koordinatensystems (x-y-z-Koordinaten) festlegt, über dem Bauteil entlang einer Bearbeitungslinie verfahrbar angeordnet ist, wobei in dem Strahlengang zwischen Laserstrahlquelle und Bearbeitungskopf mindestens ein optisches Element zwischengefügt ist, das den Laserstrahl so umformt, dass der Strahlradius an dem fokussierenden Element des Bearbeitungskopfs eine für die Bearbeitung geforderte Größe aufweist.

Derartige Laserbearbeitungsvorrichtungen sind allgemein bekannt und werden umfangreich eingesetzt.

Bei solchen Laserbearbeitungsvorrichtungen, die einen großen Verfahrweg in einer Achse (> 6 m) haben, wird der Laser mit verfahren, um die optischen Bedingungen und damit die optischen Elemente zwischen Laser und Bearbeitungsstelle auf dem Werkstück weitestgehend konstant zu halten. Die Beschränkung der möglichen Achslänge ist durch die Kosten der mechanischen Führungen und der beispielsweise in einer Führungskette mit zu führenden Versorgungsleitungen für die Stromversorgung und das Kühlwasser der Laserstrahlquelle, der Versorgungskabel für Antriebsmotore, der Kabel für Sensoren, der Schläuche für Prozessgase, usw., vorgegeben. Weiterhin ist nicht jede Laserstrahlquelle für einen Betrieb geeignet, bei dem sie verfahren wird. Insbesondere stellen bei einem Teil der Laserstrahlquellen die auftretenden Beschleunigungen und Verzögerungen ein Problem dar. Auch kann die Lebensdauer von Komponenten der Laserbearbeitungsvorrichtung durch einen mitfahrenden Betrieb herabgesetzt werden. Beispielsweise ist die Glühwendel einer Hochfrequenzröhre in einem Hochfrequenzgenerator zur Anregung der Gasentladung in einem CO₂-Laser mechanisch gering belastbar, da sie sich im Betrieb auf einer hohen Temperatur befindet.

Da der Bearbeitungsbereich einer Laserbearbeitungsvorrichtung mit feststehendem Laser auf etwa 6 m beschränkt ist, wird dieser Bearbeitungsbereich dadurch erweitert, dass der Laser in dem Bereich mit bewegt wird, der größer als 6 m ist.

Der vorliegenden Erfindung liegt die Aufgabe zugrunde, eine Laserbearbeitungsvorrichtung zu schaffen, die für die Bearbeitung von groß dimensionierten Bauteilen geeignet ist und die nicht die vorstehend angesprochenen Nachteile aufweist.

Die Aufgabe der Erfindung wird bei einer Laserbearbeitungsvorrichtung der eingangs beschriebenen Art jeweils durch die Merkmale der unabhängigen Ansprüche 1, 2 und 3 gelöst.

In einer ersten Ausführungsform der Laserbearbeitungsvorrichtung ist erfindungsgemäß das eine optische Element Teil von mindestens zwei Teleskopen, wobei die Teleskope so angeordnet sind, dass das erste Teleskop den Laserstrahlradius vergrößert und das zweite Teleskop den Laserstrahlradius verkleinert.

In einer zweiten, alternativen Ausführungsform ist, um die Aufgabe zu lösen, das erste optische Element ein fokussierendes Element, das den eintretenden Laserstrahl auf der Austrittsseite mit einer Strahltaille formt, die einer Strahltaille des Laserstrahls vor dem fokussierenden Element entspricht.

In einer dritten, alternativen Ausführungsform, die die Aufgabe löst, ist das erste optische Element Teil eines Systems aus optischen Elementen, das mindestens zwei optische Elemente umfasst, wobei der Abstand der zwei optischen Elemente größer ist als der geometrisch-optische Abstand, so dass in Strahlrichtung nach dem letzten optischen Element eine Strahltaille im Laserstrahl auftritt, deren Radius um mindestens den Faktor 1:1,6 kleiner ist als der Stahlradius am letzten optischen Element, wobei der geometrisch-optische Abstand definiert ist als der Abstand der optischen Elemente dann, wenn deren Fokuspunkte übereinander liegen.

Weitere vorteilhafte Ausführungsformen der erfindungsgemäßen Laserbearbeitungsvorrichtungen, wie sie vorstehend beschrieben sind, ergeben sich aus den abhängigen Ansprüchen.

In einer bevorzugten Ausgestaltung der ersten Ausführungsform, die die beiden Teleskope einsetzt, werden die beiden Teleskope so ausgelegt, dass der Laserstrahlradius nach dem zweiten Teleskop annähernd gleich dem Laserstrahlradius vor dem ersten Teleskop ist. Der Einsatz eines solchen Doppelteleskops hat den Vorteil, dass nahezu beliebig lange Strahlwege realisierbar sind. Diese beliebig langen Strahlwege sind nur durch die Richtungsstabilität der Strahlquelle beschränkt. Falls die Richtungsstabilität der Strahlquelle nicht ausreichend ist, so kann eine Regelung der Strahllage, z.B. am Eingang des zweiten Teleskops, erfolgen, um Richtungsabweichungen auszuregeln bzw. zu kompensieren.

Ein weiterer Vorteil liegt darin, dass durch die reduzierte Intensität der Laserstrahlung zwischen den Teleskopen der Lufteinfluss (thermal Blooming) geringer ist, da die Intensität aufgrund der Aufweitung herabgesetzt ist.

Die Teleskope können weiterhin so ausgelegt werden, dass der Laserstrahlradius nach dem zweiten Teleskop auf einen für den Bearbeitungskopf erforderlichen Radius transformiert wird. Hierzu werden die geometrisch-optischen Aufweitungsverhältnisse unterschiedlich gewählt.

Um den jeweils aus dem vorhergehenden optischen Element austretenden Laserstrahl auf der Austrittsseite mit einer Strahltaille zu formen, die der Strahltaille des Laserstrahls auf der Eintrittsseite dieses optischen Elements entspricht, werden nach dem einen ersten optischen Element weitere den Laserstrahl fokussierende optische Elemente angeordnet.

In einer vorteilhaften Ausgestaltung der Laserbearbeitungsvorrichtung umfasst das erste optische Element mindestens einen Spiegel mit deformierbarer Spiegeloberfläche. Über die Deformation der Spiegeloberfläche als Funktion des Abstands dieses Spiegels ist die Strahltaille nach diesem mindestens einen Spiegel einstellbar.

Weiterhin können nach dem ersten optischen Element weitere optische Elemente angeordnet werden. Jedes dieser weiteren optischen Elemente sollte mindestens einen Spiegel mit deformierbarer Spiegeloberfläche umfassen, wobei über die Deformation der Spiegeloberfläche als Funktion des Abstands dieses Spiegels die Strahltaille nach dem weiteren Spiegel einstellbar ist.

Um einen möglichst konstant bleibenden Strahldurchmesser zu erreichen, sollten die zwischen den einzelnen optischen Elementen erzeugten Strahltaillen der Laserstrahlung einen annähernd gleichen Strahlradius haben. Wenn der Abstand zwischen Laserstrahlquelle und Bearbeitungskopf durch Änderung der Bearbeitungsposition des Bearbeitungskopfs vergrößert oder verkleinert werden muss, werden die optischen Elemente in der Art einer Ziehharmonika gleichzeitig in etwa gleichen Verhältnissen verschoben, um den sich verändernden Abstand zwischen Strahlquelle und Bearbeitungskopf anzupassen.

Das erste optische Element sollte dann, mit einer Dynamik bewegt werden, die geringer als die Dynamik des Bewegungsablaufs des Bearbeitungskopfs ist. Dadurch werden die Beschleunigungskräfte auf einen den Strahl umfassenden Faltenbalg reduziert.

Bei einer größeren Anzahl optischer Elemente werden diese mit einer Dynamik bewegt, die geringer als die Dynamik des Bewegungsablaufs des Bearbeitungskopfs ist. Gleichzeitig sollte das mindestens eine optische Element, vorzugsweise dasjenige, das sich am nächsten am - sich mit hoher Dynamik bewegenden - Bearbeitungskopf befindet, mit einer Dynamik bewegt werden, die schneller als die Dynamik der anderen optischen Elemente ist. Hieraus ergibt sich der Vorteil, dass die auf den Balg wirkenden Zugkräfte beschränkt und die Antriebsleistung gering gehalten werden kann.

In einer Weiterbildung der dritten Ausführungsform der Erfindung, die ein System aus mindestens zwei optischen Elementen einsetzt, mit der Forderung, dass der Abstand der zwei optischen Elemente größer ist als der geometrische Abstand, wird vorzugsweise als erstes optisches Element ein Teleskop eingesetzt. Der Einsatz eines solchen Teleskops als erstes optisches Element hat den Vorteil, dass die Anzahl der nachfolgenden optischen Elemente beschränkt werden kann.

Bei dieser dritten Ausführungsform, die als erstes optisches Element ein Teleskop verwendet, kann darüber hinaus das mindestens eine optische Element ein Spiegel mit deformierbarer Oberfläche sein. Die Deformation dieser Spiegeloberfläche wird dann in Abhängigkeit des Abstands dieses Spiegels von einer nachfolgenden Einheit derart eingestellt, dass der Radius der Laserstrahlung in einem Bereich von einem minimalen Abstand zu einem maximalen Abstand der nachfolgenden Einheit gleich gehalten wird.

In allen drei Ausführungsformen der Laserbearbeitungsvorrichtung nach der Erfindung kann das mindestens eine optische Element als Strahlumlenkelement eingesetzt werden, das den Laserstrahl in Richtung mindestens einer weiteren Koordinate umlenkt. Diese Umlenkung kann beispielsweise um 90° zu der Strahlrichtung des Laserstrahls unmittelbar nach der Laserstrahlquelle erfolgen. In einer technischen Umsetzung ist diese weitere Koordinate durch eine entlang einer Längstraverse, die die erste Koordinate festlegt, weitere, verfahrbare Quertraverse bestimmt.

Als solches Strahlumlenkelement kann ein Spiegel mit deformierbarer Spiegeloberfläche eingesetzt werden. Diese Maßnahme ist hat den Vorteil, dass diese Umlenkung gleichzeitig zur Strahlformung eingesetzt werden kann.

In Verbindung mit der Maßnahme, dass mindestens eines der optischen Elemente als Strahlumlenkelement eingesetzt ist, das den Laserstrahl in Richtung mindestens einer weiteren Koordinate umlenkt, wobei diese weitere Koordinate auch durch eine entlang der Längstraverse verfahrbare Quertraverse gebildet werden kann, wird in einer Ausführungsform das erste Element in Strahlrichtung nach dem Strahlumlenkelement eingesetzt. Ein weiteres bevorzugtes Merkmal in Verbindung mit einer Strahlumlenkung liegt darin, dass zwischen dem ersten optischen Element und einem weiteren optischen Element das Strahlumlenkelement eingesetzt ist. In einer alternativen Ausführungsform kann das zweite Teleskop in Strahlrichtung gesehen nach dem Strahlumlenkelement angeordnet werden; vorzugsweise bildet hierbei ein optisches Element des ersten Teleskops das Strahlumlenkelement. Das Strahlumlenkelement wird in vorteilhafter Weise vor dem ersten Teleskop angeordnet.

Vorstehend wurde eine Ausführungsform der Erfindung beschrieben, die zwei Teleskope einsetzt und bei der das erste Teleskop den Laserstrahlradius vergrößert und das zweite Teleskop den Laserstrahlradius verkleinert. Vorzugsweise wird bei einer solchen Ausführungsform das zweite Teleskop in Strahlrichtung gesehen vor dem Strahlumlenkelement angeordnet. Hierdurch wird die Masse dieses Teleskopes mit der Quertraverse mitverfahren.

Üblicherweise ist es erforderlich, den Strahlengang der Laserstrahlung gegen Einflüsse von außen durch Hüllteile, beispielsweise durch Faltenbälge, zu schützen. Für die erfindungsgemäßen Laserbearbeitungsvorrichtungen wird der Laserstrahl durch Hüllteile umschlossen, die in ihrer Länge veränderbar sind. Die erfindungsgemäße Vorrichtung sieht mehrere Hüllteile vor, die entsprechend der Aufteilung der optischen Elemente unterteilt sind. Hierdurch wird das jeweilige optische Element genutzt, um die Hüllteile zu fixieren. Wenn die jeweiligen optischen Elemente gegeneinander in ihrem Abstand verschoben werden, werden die an den optischen Elementen fixierten Hüllteile, beispielsweise Faltenbälge, entsprechend gedehnt oder zusammengeschoben. Die Länge dieser Hüllteile ist dabei durch die mechanische Festigkeit des Hüllteils bzw. Balgs, und damit durch die zulässigen Zugkräfte, begrenzt.

Um darüber hinaus noch längere Strahlengänge zu ermöglichen, werden die Hüllteile bzw. die Faltenbälge in mehrere Teile segmentiert und durch weitere Zwischenstücke separat angetrieben. In solchen Zwischenstücken können, wie vorstehend erwähnt, die Optiken der optischen Elemente angeordnet werden.

Hierbei kann mindestens ein Hüllteil vorgesehen werden, das in Strahlrichtung zwischen dem letzten optischen Element und dem Bearbeitungskopf angeordnet ist und das so ausgelegt ist, dass es der Bewegungsdynamik des Bearbeitungskopfs folgen kann.

Benachbart dem Vorrichtungsteil, beispielsweise dem Bearbeitungskopf, auf das starke Beschleunigungen einwirken, wird vorzugsweise ein kurzer Balg angeordnet, dessen eines Ende mit geringeren Beschleunigungen betrieben wird. Der dem kurzen Balg folgende Balg unterliegt dann nicht nur geringen Beschleunigungen, sondern die durchzuführenden Bewegungen enthalten auch keine hochfrequenten Komponenten und die Anzahl der Walkbewegungen ist reduziert, was die Lebensdauer erhöht.

Um die auf die Hüllteile einwirkenden Kräfte gering zu halten, können die Hüllteile auch asymmetrisch unterteilt werden.

Bei einer schnellen Veränderung des Abstands zwischen Laserstrahlquelle und Bearbeitungskopf treten schnelle Volumenänderungen des Volumens auf, das durch die Hüllteile umschlossen ist. Um diese schnellen Volumenänderungen zu kompensieren, wird ein Ausgleichspuffer vorgesehen, dessen Volumen variabel ist und dessen Volumen mit dem durch die Hüllteile umschlossenen Volumen in Verbindung steht. Bei einer Veränderung der Länge der Hüllteile wird das sich innerhalb der Hüllteile verändernde Volumen durch eine entsprechende Veränderung des Volumens des Ausgleichspuffers ausgeglichen.

Um die Dynamik der zu verfahrenden Halterungen für die Enden der Hüllteile, an dem vorzugsweise auch die optischen Elemente angeordnet sind, nicht zu beeinflussen, sollte die Veränderung des Volumens des Ausgleichspuffers in Abhängigkeit der sich verändernden Länge der Hüllteile zwangsgeführt werden.

Der Ausgleichspuffer sollte zumindest in einer Dimension veränderbar sein, wobei die Abmessungen des Ausgleichspuffers senkrecht zu dieser einen Dimension wesentlich größer sind als der Durchmesser der Hüllteile senkrecht zum Laserstrahl. Hierdurch ergibt sich eine variable Anordnung des Ausgleichsbehälters.

Um einen langen Kompensationsbalg zu vermeiden, kann am Strahleintritt ein Hüllteil mit großem Querschnitt eingesetzt werden, das so bewegt wird, dass das aufsummierte Volumen aller Faltenbälge konstant bleibt.

Es ist auch bevorzugt, dass für jeweils ein Hüllteil ein Ausgleichspuffer vorgesehen ist.

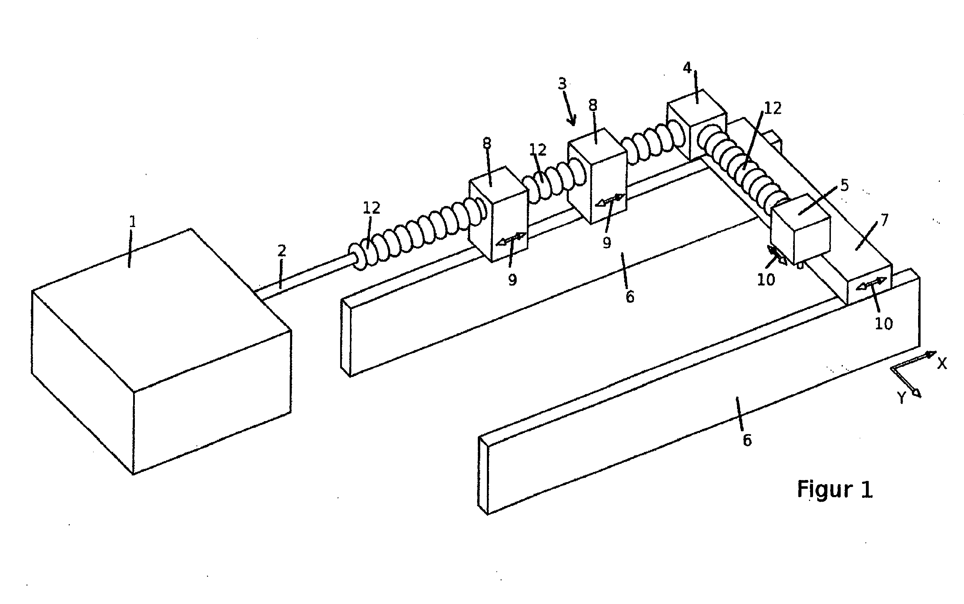

Weitere Ziele, Merkmale sowie vorteilhafte Anwendungsmöglichkeiten der vorliegenden Erfindung werden anhand der nachfolgenden Beschreibung von Ausführungsbeispielen anhand der Zeichnungen erläutert. Dabei bilden sämtliche wörtlich beschriebenen und/oder bildlich dargestellten Merkmale in ihrer sinnvollen Kombination den Gegenstand der vorliegenden Erfindung; auch unabhängig von den Patentansprüchen und deren Rückbezügen.
- Figur 1: zeigt eine perspektivische, schematische Ansicht einer Laserbearbeitungsvorrichtung gemäß der Erfindung,
- Figur 2: zeigt ein Diagramm für ein Doppelteleskop, das in den Strahlengang zwischen Laserstrahlquelle und Bearbeitungskopf zwischengefügt ist, wobei in dem Diagramm der Strahlradius der Laserstrahlung in Abhängigkeit von dem zurückgelegten Strahlweg aufgetragen ist,
- Figur 3: zeigt ein Diagramm vergleichbar mit demjenigen der Figur 2, das jedoch den Strahlradius in Abhängigkeit des zurückgelegten Strahlwegs für ein Doppelteleskop mit unterschiedlichem Strahldurchmesser einer Laserstrahlung angibt,
- Figur 4: zeigt schematisch den Strahlverlauf in einer Linsenanordnung, die in den Strahlengang zwischen Laserstrahlquelle und Bearbeitungskopf eingefügt werden kann,
- Figur 5: zeigt den Strahlverlauf in optischen Elementen, die als Spiegel mit deformierbarer Oberfläche ausgebildet sind,
- Figur 6: zeigt den Strahlverlauf zwischen Laserstrahlquelle und Bearbeitungskopf unter Verwendung eines optischen Elements, das in Abhängigkeit von der Bewegung des Bearbeitungskopfs verfahren wird,
- Figur 7: zeigt eine Anordnung vergleichbar mit derjenigen der Figur 6, allerdings mit mehreren optischen Elementen zwischen Laserstrahlquelle und Bearbeitungskopf,
- Figur 8: zeigt eine Anordnung vergleichbar beispielsweise mit derjenigen der Figur 6, wobei zwei Hüllteile vorgesehen sind, die der Bewegung des Bearbeitungskopfs sowie des optischen Elements folgen,
- Figur 9: zeigt ein weiteres Diagramm, bei dem der Radius der Laserstrahlung in Abhängigkeit des Abstands des Bearbeitungskopfs aufgetragen ist, für ein bisher übliches Strahlführungssystem. Durch die natürliche Divergenz des La- serstrahls kommt es in unterschiedlichen Entfernungen des Bearbeitungskopfs von der Laserstrahlquelle zu unterschiedlichen Fokusverläufen.
- Figur 10: zeigt ein Diagramm für ein Teleskop als optisches Element zwischen Laserstrahlquelle und Bearbeitungskopf, wobei mindestens ein optisches Element eine deformierbare Spiegeloberfläche für Einstellungen besitzt und Einstellungen derart erfolgen, dass der Radius der Laserstrahlung gleich gehalten wird,
- Figur 11: zeigt ein Diagramm, das mit demjenigen der Figur 10 vergleichbar ist, wobei allerdings Einstellungen derart erfolgen, dass der Radius der Laserstrahlung auf einen gewünschten Radius einstellbar ist,
- Figuren 12: und 13 zeigen schematische Anordnungen für Hüllteile mit Ausgleichspuffer, die den Laserstrahl umschließen.
Die Laserbearbeitungsvorrichtung, wie sie schematisch in Figur 1 dargestellt ist und die zum Bearbeiten von groß dimensionierten Bauteilen ausgelegt ist, umfasst eine Laserstrahlquelle 1, deren Laserstrahl 2 über eine optische Einheit, die allgemein mit dem Bezugszeichen 3 bezeichnet ist, und über einen Umlenkspiegel 4 zu einem Bearbeitungskopf 5 geführt wird.

Der Bearbeitungskopf 5 ist mittels Längs- und Quertraversen 6, 7 verschiebbar, wobei die zwei Längstraversen 6 in einem rechtwinkligen Koordinatensystem die x-Richtung festlegen, während die Quertraverse 7, die entlang der Längstraversen 6 verschiebbar ist, die y-Richtung festlegt, in der der Bearbeitungskopf 5 verschiebbar ist.

Zwischen der Laserstrahlquelle 1 und dem Umlenkspiegel 4 sind in der gezeigten Ausführungsform zwei optische Elemente 8, die Teil der optischen Einheit 3 sind, vorgesehen. Diese zwei optischen Elemente 8 sind entlang der einen Längstraverse 6 in Richtung der jeweiligen Doppelpfeile 9 verschiebbar. Gleiches gilt für den Umlenkspiegel 4, der an der Quertraverse 7 gehalten ist und sich zusammen mit der Quertraverse 7 entlang der Längstraversen 6 verschiebt. Die Verschieberichtungen der Quertraverse 7 sind mit dem Doppelpfeil 10 gekennzeichnet, während die Verschieberichtung des Bearbeitungskopfs 5 durch einen Doppelpfeil 11 angegeben ist.

Zwischen jeder der Einheiten 1, 8, 4 und 5 ist jeweils ein Hüllteil in Form eines Faltenbalgs 12 angeordnet, mit denen der Laserstrahl umschlossen ist. Diese Faltenbälge 12 sind mit ihren Enden an den jeweiligen Einheiten 8, 4 und 5 befestigt, so dass sie sich entsprechend der Dynamik des Bewegungsablaufs des Bearbettungskopfs 5 und den sich entsprechend bewegenden optischen Teilen 4 und 8 verlängern oder zusammenziehen.

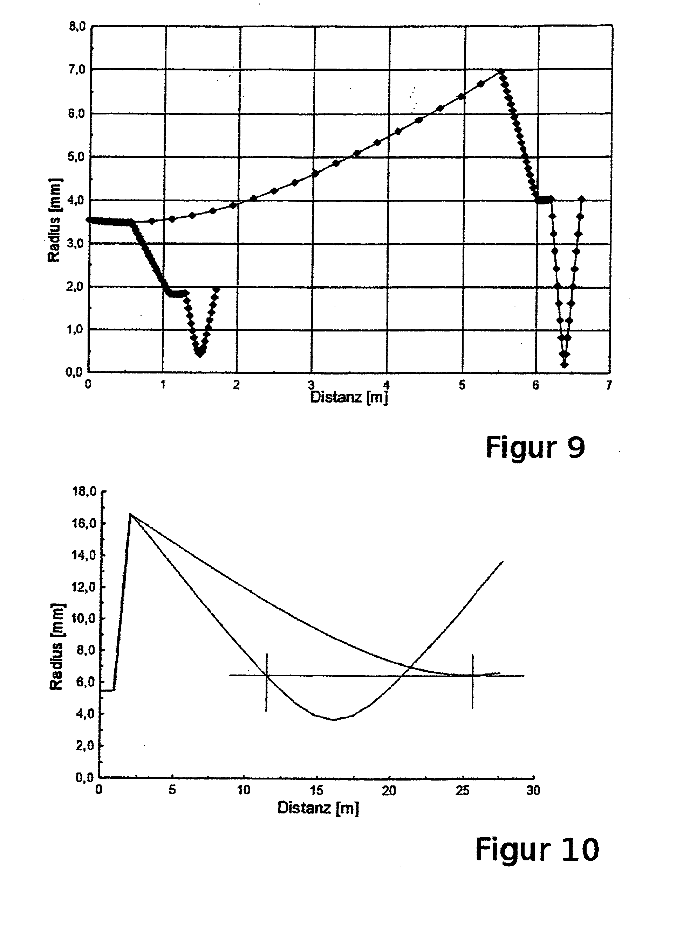

Üblicherweise ist der maximale Verfahrweg zwischen der feststehenden Laserstrahlquelle 1 und dem Laserbearbeitungskopf 5 bzw. der x-Achse des zugeordneten Umlenkspiegels 4 begrenzt. Bei größeren Abständen zwischen Laserstrahlquelle und Bearbeitungskopf wird der Laserstrahl, wie in Figur 9 dargestellt, durch die natürliche Divergenz unterschiedlich in Divergenz am Ort der Fokussierung und Radius. Der maximal mögliche Verfahrweg ist dadurch beschränkt. Wenn bei herkömmlichen Laserbearbeitungsvorrichtungen Bearbeitungswege erforderlich sind, die üblicherweise 6 m übersteigen, wird die gesamte Laserstrahlquelle mit bewegt.

Mit der Laserbearbeitungsvorrichtung, wie sie in Figur 1 schematisch gezeigt ist, ist es möglich, die Laserstrahlquelle 1 auch bei größeren Abständen zu dem Laserbearbeitungskopf 5 stationär zu halten, da der Laserstrahl 2 in seiner Querschnittsform durch die optischen Elemente 8 dem sich verändernden Abstand zwischen Laserstrahlquelle 1 und Bearbeitungskopf 5 angepasst wird.

In einer Ausführungsform wird ein Doppelteleskop verwendet.

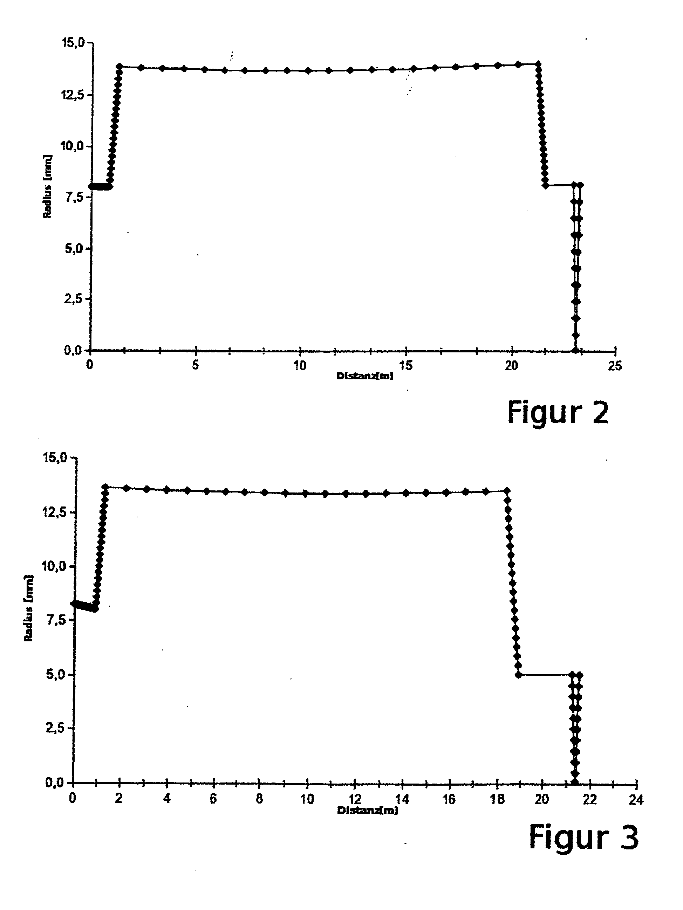

Der Radius des Laserstrahls 2 in Abhängigkeit der Strahlweglänge ist in Figur 2 für ein Doppelteleskop und in Figur 3 für ein Doppelteleskop in Bezug auf unterschiedliche Strahldurchmesser auf der fokussierenden Optik dargestellt. Bedingt durch die Aufweitung des Strahls durch das erste Teleskop verringert sich die natürliche Divergenz des Strahles, so dass der Strahldurchmesser über große Verfahrweglängenänderungen nahezu konstant gehalten werden kann.

Anhand des Diagramms der Figur 3 ist zu erkennen, dass auch ein veränderter - im vergleich zum eintretenden Laserstrahl - Strahlradius durch eine unterschiedliche Wahl der geometrisch-optischen Aufweitungen der Teleskope erreicht werden kann.

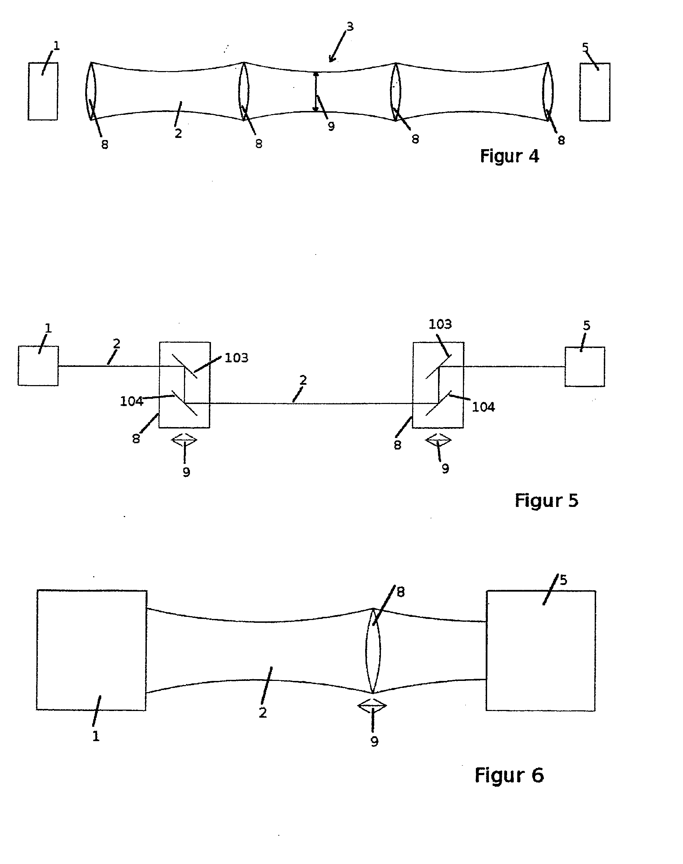

Figur 4 zeigt eine Anordnung der optischen Einheit, wie sie in der Laserbearbeitungsvorrichtung der Figur 1 einsetzbar ist, bei der zwischen Laserstrahlquelle 1 und Bearbeitungskopf 5 vier optische Elemente 8 - als Linsen dargestellt - vorgesehen sind, die den von der Laserstrahlquelle 1 abgegebenen Laserstrahl 2 jeweils so formen, dass der Strahldurchmesser am Ort des Bearbeitungskopfs unverändert ist.

Eine praktische Ausführung einer solchen Anordnung, wie sie schematisch in Figur 4 gezeigt ist, ist in Figur 5 gezeigt. Diese Ausführungsform besitzt zwei optische Elemente 8, die entlang des Doppelpfeils 9 beispielsweise entlang der Traverse 6 der Figur 1 verschiebbar angeordnet sind. Jedes dieser optischen Elemente 8 umfasst einen ersten Umlenkspiegel und einen zweiten Umlenkspiegel 103, 104, von denen jeweils mindestens einer eine deformierbare Spiegeloberfläche aufweist. Über die Deformation der Spiegeloberfläche als Funktion des Abstands der beiden Elemente 8 zueinander wird die Strahltaille des Laserstrahls 2 zwischen den beiden Elementen 8 eingestellt.

Für die schematische Anordnung der Figur 4 sollten bei einer Änderung des Abstands zwischen Laserstrahlquelle 1 und Bearbeitungskopf 5 die jeweiligen Elemente 8 so entlang einer Führung, beispielsweise der Längstraverse 6 der Figur 1, verschoben werden, dass die Radien der zwischen den Elementen 8 erzeugten Strahltaillen 15 annähernd gleich sind. Folglich werden die einzelnen Elemente 8 in der Art einer Ziehharmonika auseinander gezogen oder zusammen geschoben.

Figur 6 zeigt eine Anordnung mit nur einem optischen Element 8. Eine wesentliche Maßnahme bei einer solchen Vorrichtung ist diejenige, dass das erste optische Element 8, das im Strahlengang des Laserstrahls 2 der Laserstrahlquelle 1 angeordnet ist, mit einer Dynamik bewegt wird, die geringer als die Dynamik des Bewegungsablaufs des Bearbeitungskopfs 5 ist. Hierdurch wird erreicht, dass das optische Element einer geringeren Beschleunigung ausgesetzt ist. Bei kleinen Bewegungen des Bearbeitungskopfs treten keine Bewegungen des Elements 8 auf.

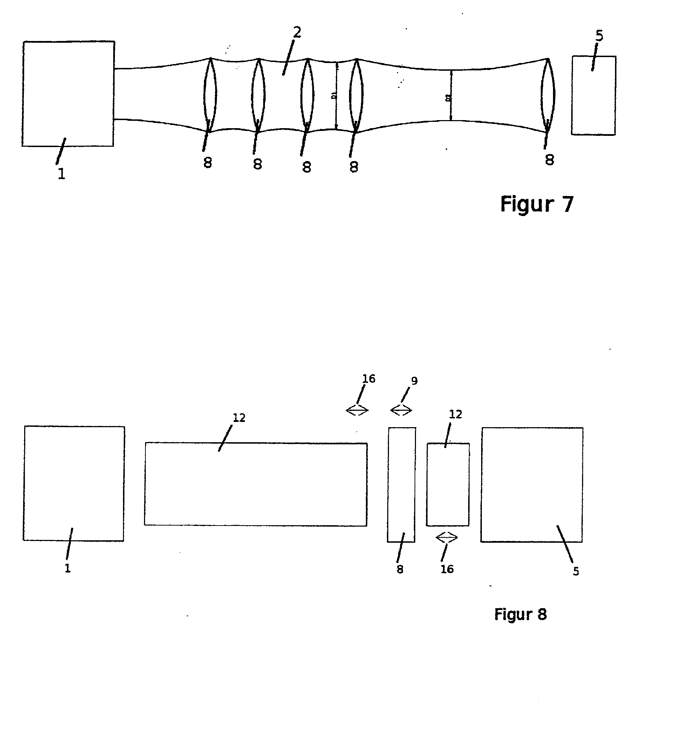

Falls zwischen Laserstrahlquelle 1 und Bearbeitungskopf 5 mehrere optische Elemente 8 erforderlich sind, wie dies in Figur 7 dargestellt ist, sollten die optischen Elemente 8 auch in diesem Fall mit einer Dynamik bewegt werden, die geringer als die Dynamik des Bewegungsablaufs des Bearbeitungskopfs 5 ist. Außerdem sollte mindestens ein optisches Element 8 mit einer Dynamik bewegt werden, die schneller ist als die Dynamik der anderen optischen Elemente 8. Dies ist in Figur 7 der Fall für das am weitesten rechts liegende optische Element 8, das den Laserstrahl 2 dem Bearbeitungskopf zuführt. Mit dieser Maßnahme wird gezeigt, dass die Argumente zur Figur 6 auf einen erweiterten Strahlweg übertragbar sind.

Figur 8 zeigt einen mit der Figur 6 vergleichbaren Aufbau, der verdeutlicht, dass zwischen Laserstrahlquelle 1 und optischem Element 8 einerseits und optischem Element 8 und Bearbeitungskopf 5 andererseits Hüllteile bzw. Faltenbälge 12 angeordnet sind, die den Laserstrahl 2 umschließen. Diese Hüllteile 12 verändern ihre Länge entsprechend der Position des optischen Elements 8 und des Bearbeitungskopfs 5, wie durch die Doppelpfeile 16 angedeutet ist.

Die einen Enden der Faltenbälge 12 können mit einer Halterung, die dem optischen Element 8 zugeordnet ist, verbunden sein, so dass die Bewegung des Faltenbalgs 12 unmittelbar mit der Bewegung des optischen Elements 8 gekoppelt ist.

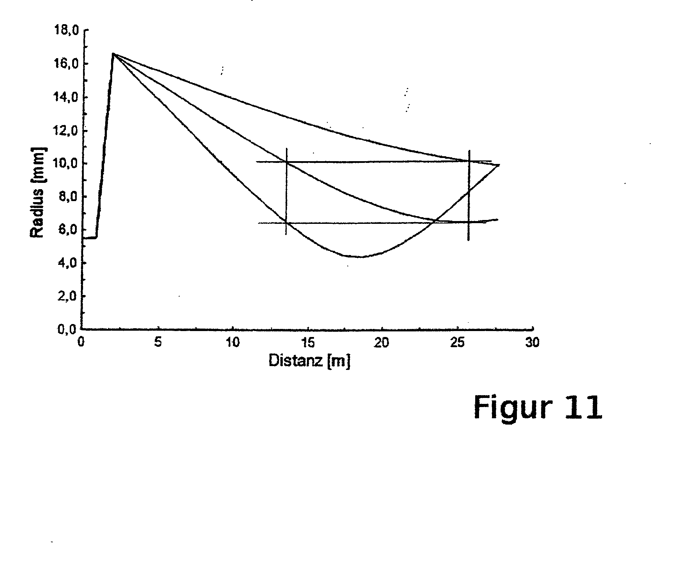

Figur 10 zeigt ein Diagramm für ein Teleskop als optisches Element zwischen Laserstrahlquelle und Bearbeitungskopf. Mindestens ein optisches Element besitzt ein optisches Element mit einer deformierbaren Spiegeloberfläche. Anhand dieses Diagramms ist zu erkennen, dass durch unterschiedliche Einstellung der deformierbaren Operfläche in unterschiedlichen Abständen gleiche Strahlradien einstellbar sind. Das Diagramm der Figur 11 zeigt den Fall, bei dem in einem Distanzbereich der Strahlradius - in den eingezeichneten Grenzen - frei einstellbar ist.

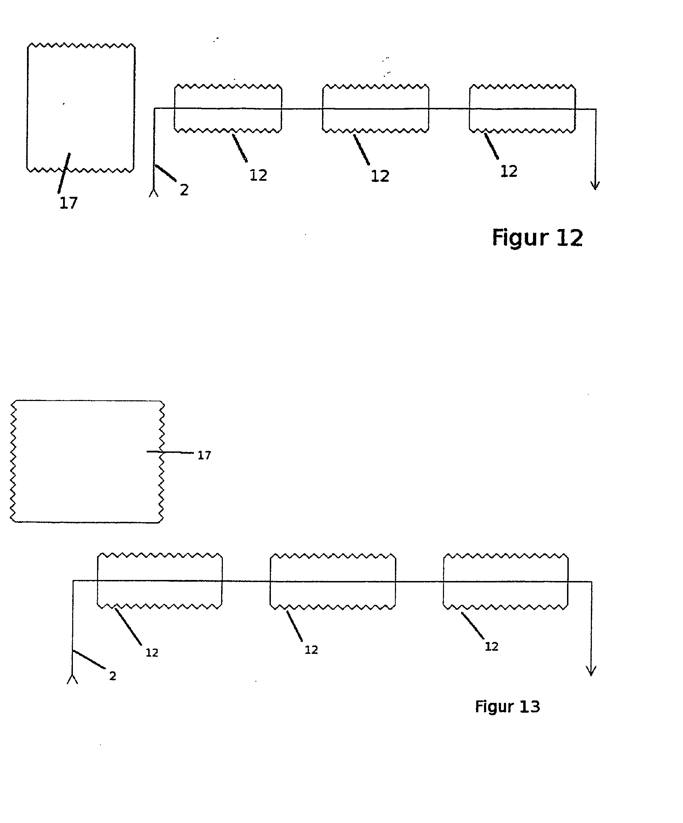

Figuren 12 und 13 zeigen schematische Anordnungen für Hüllteile, beispielsweise in Form von Faltenbälgen 12, durch die der Laserstrahl 2 umschlossen ist. Dabei ist die Länge der Faltenbälge 12 durch die mechanische Festigkeit des Balgs und damit die zulässigen Zugkräfte begrenzt.

Da das durch die Hüllteile 12 umschlossene Volumen gegen die Außenumgebung abgeschlossen ist, ist es erforderlich, wenn die zwischen den einzelnen Hüllteilen 12 angeordneten optischen Elemente verschoben werden und damit die jeweiligen Hüllteile verlängert oder verkürzt werden, dann das durch die Hüllteile umschlossene und sich verändernde Volumen auszugleichen. Für einen solchen Ausgleich ist ein Ausgleichspuffer oder Ausgleichsbehälter 17 vorgesehen, der ebenfalls als Faltenbalg ausgeführt ist und mit dem Volumen der Faltenbälge 12 in Verbindung steht. Bevorzugt besitzt der Pufferbehälter 17 einen wesentlich größeren Durchmesser als die Faltenbälge 12, so dass er mit kleineren Kontraktionen oder Extensionen das größer oder kleiner werdende Volumen der Faltenbälge 12 ausgleichen kann. Die Figuren 12 und 13 verdeutlichen, dass dieser Ausgleichsbehälter 17 an einer beliebigen Position innerhalb der Laserbearbeitungsvorrichtung angeordnet werden kann.

## Patentansprüche

1. Laserbearbeitungsvorrichtung für groß dimensionierte Bauteile mit einer Laserstrahlquelle und mindestens einem Bearbeitungskopf, wobei der Bearbeitungskopf mittels mindestens einer Längstraverse, die mindestens eine Koordinate (x-Koordinate) eines rechtwinkligen Koordinatensystems festlegt, über dem Bauteil entlang einer Bearbeitungslinie verfahrbar angeordnet ist, wobei in dem Strahlengang zwischen Laserstrahlquelle und Bearbeitungskopf mindestens ein optisches Element zwischengefügt ist, das den Laserstrahl so umformt, dass der Strahlradius an dem fokussierenden Element des Bearbeitungskopfs eine für die Bearbeitung geforderte Größe aufweist, **dadurch gekennzeichnet, dass** das eine optische Element (8) Teil von mindestens zwei Teleskopen ist, wobei die Teleskope so angeordnet sind, dass das erste Teleskop den Laserstrahlradius vergrößert und das zweite Teleskop den Laserstrahlradius verkleinert.

2. Laserbearbeitungsvorrichtung für groß dimensionierte Bauteile mit einer Laserstrahlquelle und einem Bearbeitungskopf, wobei der Bearbeitungskopf mittels mindestens einer Längstraverse, die mindestens eine Koordinate (x-Koordinate) eines rechtwinkligen Koordinatensystems (x-y-z-Koordinaten) festlegt, über dem Bauteil entlang einer Bearbeitungslinie verfahrbar angeordnet ist, wobei in dem Strahlengang zwischen Laserstrahlquelle und Bearbeitungskopf mindestens ein optisches Element zwischengefügt ist, das den Laserstrahl so umformt, dass der Strahlradius an dem fokussierenden Element des Bearbeitungskopfs eine für die Bearbeitung geforderte Größe aufweist, **dadurch gekennzeichnet, dass** das erste optische Element (8) ein fokussierendes Element ist, das den eintretenden Laserstrahl auf der Austrittsseite mit einer Strahltaille (18) formt, die einer Strahltaille (18) des Laserstrahls (2) vor dem fokussierenden Element (8) entspricht.

3. Laserbearbeitungsvorrichtung für groß dimensionierte Bauteile mit einer Laserstrahlquelle und einem Bearbeitungskopf, wobei der Bearbeitungskopf mittels mindestens einer Längstraverse, die mindestens eine Koordinate (x-Koordinate) eines rechtwinkligen Koordinatensystem festlegt, über dem Bauteil entlang einer Bearbeitungslinie verfahrbar angeordnet ist, wobei in dem Strahlengang zwischen Laserstrahlquelle und Bearbeitungskopf mindestens ein optisches Element zwischengefügt ist, das den Laserstrahl so umformt, dass der Strahlradius an dem fokussierenden Element des Bearbeitungskopfs eine für die Bearbeitung geforderte Größe aufweist, **dadurch gekennzeichnet, dass** das erste optische Element (8) Teil eines Systems aus optischen Elementen (8) ist, das mindestens zwei optische Elemente (8) umfasst, wobei der Abstand der zwei optischen Elemente (8) größer ist als der geometrisch-optische Abstand, so dass in Strahlrichtung nach dem letzten optischen Element (8) eine Strahltaille (9) im Laserstrahl (2) auftritt, deren Radius um mindestens den Faktor 1:1,6 kleiner ist als der Stahlradius am letzten optischen Element (8), wobei der geometrisch-optische Abstand definiert ist als der Abstand der optischen Elemente (8) dann, wenn deren Fokuspunkte übereinander liegen.

4. Laserbearbeitungsvorrichtung nach Anspruch 1, **dadurch gekennzeichnet, dass** die beiden Teleskope so ausgelegt sind, dass der Laserstrahlradius nach dem zweiten Teleskop auf einen für den Bearbeitungskopf (5) erforderlichen Radius transformiert wird.

5. Laserbearbeitungsvorrichtung nach Anspruch 4, **dadurch gekennzeichnet, dass** nach dem einen ersten optischen Element (8) weitere den Laserstrahl (2) fokussierende optische Elemente (8) angeordnet sind, die jeweils den aus dem vorhergehenden optischen Element (8) austretenden Laserstrahl (2) auf der Austrittsseite mit einer Strahltaille (9) formen, die der Strahltaille (9) des Laserstrahls (2) auf der Eintrittsseite dieses optischen Elements (8) entspricht.

6. Laserbearbeitungsvorrichtung nach Anspruch 5, **dadurch gekennzeichnet, dass** das erste optische Element (8) mindestens einen Spiegel (103; 104) mit deformierbarer Spiegeloberfläche umfasst, wobei über die Deformation der Spiegeloberfläche als Funktion des Abstands dieses Spiegels (103; 104) die Strahltaille nach diesem Spiegel (103; 104) einstellbar ist.

7. Laserbearbeitungsvorrichtung nach Anspruch 6, **dadurch gekennzeichnet, dass** nach dem ersten optischen Element (8) weitere optische Elemente (8) angeordnet sind, wobei jedes weitere optische Element (8) mindestens einen Spiegel (103; 104) mit deformierbarer Spiegeloberfläche umfasst, wobei über die Deformation der Spiegeloberfläche als Funktion des Abstands dieses Spiegels (103; 104) die Strahltaille nach dem weiteren Spiegel einstellbar ist.

8. Laserbearbeitungsvorrichtung nach Anspruch 6, **dadurch gekennzeichnet, dass** das erste optische Element (8) mit einer Dynamik bewegt wird, die geringer als die Dynamik des Bewegungsablaufs des Bearbeitungskopfs (5) ist.

9. Laserbearbeitungsvorrichtung nach Anspruch 3, **dadurch gekennzeichnet, dass** als erstes optisches Element (8) ein Teleskop eingesetzt ist.

10. Laserbearbeitungsvorrichtung nach Anspruch 9, **dadurch gekennzeichnet, dass** mindestens ein optisches Element (8) als Spiegel mit deformierbarer Oberfläche ausgebildet ist, wobei die Deformation der Spiegeloberfläche in Abhängigkeit des Abstands dieses Spiegels (8) von einer nachfolgenden Einheit so einstellbar ist, dass in einem Bereich von einem minimalen Abstand zu einem maximalen Abstand der nachfolgenden Einheit (8) der Radius der Laserstrahlung (2) gleich gehalten wird.

11. Laserbearbeitungsvorrichtung nach Anspruch 9, **dadurch gekennzeichnet, dass** mindestens ein optisches Element (8) als Spiegel mit deformierbarer Oberfläche ausgebildet ist, wobei die Deformation der Spiegel oberfläche in Abhängigkeit des Abstands dieses Spiegels (8) von einer nachfolgenden Einheit (8) so einstellbar ist, dass in einem Bereich von einem minimalen Abstand zu einem maximalen Abstand dieses Spiegels (8) von der nachfolgenden Einheit (8) der Radius der Laserstrahlung (2) von einem minimalen zu einem maximalen Radius einstellbar ist.

12. Laserbearbeitungsvorrichtung nach einem der Ansprüche 1 bis 11, **dadurch gekennzeichnet, dass** mindestens eines der optischen Elemente (8) als Strahlumlenkelement (4) eingesetzt ist, das den Laserstrahl (2) in Richtung mindestens einer weiteren Koordinate umlenkt.

13. Laserbearbeitungsvorrichtung nach einem der Ansprüche 1 bis 12, **dadurch gekennzeichnet, dass** der Laserstrahl (2) durch Hüllteile (12) umschlossen ist, die in ihrer Länge veränderbar sind.

14. Laserbearbeitungsvorrichtung nach Anspruch 13, **dadurch gekennzeichnet, dass** mehrere Hüllteile (12) vorgesehen sind, die entsprechend der Aufteilung der optischen Elemente (8) unterteilt sind.

15. Laserbearbeitungsvorrichtung nach einem der Ansprüche 13 oder 14, **dadurch gekennzeichnet, dass** mindestens ein Ausgleichspuffer (17) vorgesehen ist, dessen Volumen variabel ist und dessen Volumen mit dem durch die Hüllteile (12) umschlossenen Volumen in Verbindung steht, wobei bei einer Veränderung der Länge der Hüllteile (12) das sich innerhalb der Hüllteile (12) verändernde Volumen durch eine entsprechende Veränderung des Volumens des Ausgleichspuffers (17) ausgeglichen wird.
